# EUROPÄISCHE PATENTSCHRIFT

(11) **EP 1 546 550 B1**
(45) Veröffentlichungstag und Bekanntmachung des Hinweises auf die Patenterteilung: **05.03.2014**
(21) Anmeldenummer: 03795782.6
(22) Anmeldetag: 22.09.2003
(51) Int. Cl.: F03D 11/04, F03D 1/00

(54) **MOBILE WINDENERGIEANLAGE**
MOBILE AEROGENERATOR
ÉOLIENNE MOBILE

(30) Priorität: 27.09.2002 DE 10245078
(43) Veröffentlichungstag der Anmeldung: 29.06.2005
(60) Teilanmeldung: 11153029.1
(73) Patentinhaber: Wobben Properties GmbH, 26605 Aurich (DE)
(72) Erfinder: Aloys Wobben, 26607 Aurich (DE)
(74) Vertreter: Eisenführ Speiser
(86) Internationale Anmeldenummer: PCT/EP2003/010518
(87) Internationale Veröffentlichungsnummer: WO 2004/038215

(56) Entgegenhaltungen:
- WO-A-01/44585
- WO-A-02/27105
- WO-A-02/41444
- WO-A-02/056411
- DE-A1- 3 405 466
- DE-U1- 29 510 415
- JP-A- 2000 283 018
- RU-C1- 2 009 372
- US-A- 5 531 419
- US-B1- 6 408 575
- US-B2- 6 873 303
- KUWAHARA ET AL: "Prefabricated Building System for Radio Relay Stations" REVIEW OF THE ELECTRICAL COMMUNICATION LABORATORIES, MUSASHINO ELECTRICAL COMMUNICATION LABORATORY. TOKYO, JP, Bd. 27, Nr. 3/4, 1. März 1979 (1979-03-01), Seiten 236-250, XP002078084

## Beschreibung

Die Windenergieanlagentechnik hat sich in den letzten 20 Jahren dramatisch weiterentwickelt. Mittlerweile gibt es Anlagen in der Größenordnung bis zu 5 MW und die zukünftige Entwicklung lässt auch noch Anlagen mit einer größeren Nennleistung erwarten, Die vorliegend Anmeldung betrifft nicht bevorzugt solche Megawattanlagen, sondern eher kleine Anlagen, insbesondere eine kleine Windenergieanlage von etwa 50 bis 150 kW Nennleistung, die sich möglichst unabhängig von intensiver Maschinenunterstützung praktisch an jedem Ort der Welt aufstellen lässt.

Bislang ist es für die Herstellung der Windenergieanlagen üblich, dass einzelne Komponenten der Windenergieanlage z.B. der Turm, der Rotor, die Rotorblätter, der Generator, das Maschinenhaus, der Transformator, die Steuerungselektronik usw. einzeln zum Aufstellort transportiert und dort zusammengesetzt werden. Für das Errichten des Turms ist hierbei regelmäßig ein Kran notwendig, der ebenfalls auch zum Aufsetzen des Maschinenhauses bzw. für das Anbringen des Rotors und des Generators benötigt wird. Die einzelnen Anlagenteile werden mittels LKW zum Errichtungsort der Windenergieanlage geschafft.

Aus RU-C1-2 009 372C1 ist eine Windenergieanlage bekannt, bei welcher Anlagenteile in einem Container untergebracht sind, wobei der Container selbst auf Rollen/Rädern gelagert ist und der Container somit zum Aufbauort gezogen werden kann.

Aufgabe der vorliegenden Erfindung ist es, die Errichtung einer Windenergieanlage zu vereinfachen.

Die Aufgabe wird erfindungsgemäß mit den Merkmalen nach Anspruch 1 sowie einem Verfahren zur Errichtung einer Windenergieanlage mit den Merkmalen nach Anspruch 2 gelöst. Vorteilhafte Weiterbildungen sind in den Unteransprüchen beschrieben.

Bei der erfindungsgemäßen Windenergieanlage werden die gesamten Anlagenkomponenten bzw. alle wesentlichen Komponenten in einem Standardcontainer (z.B. 20 Fuß; 40 Fuß) transportiert. Der Vorteil solcher Standardcontainer besteht darin, dass es hierfür ausreichend Transportmittel wie z.B. LKW-Containertransporter gibt,. mittels denen der Container auch an Land transportiert werden können. Darüber hinaus sind solche Standardcontainer für den Schiffsverkehr seit langem eingeführt und mithin kann die gesamte Verschiffung auch mehrerer Anlagen in mehreren Containern auf einfache Art und Weise durch Containerschiffe vorgenommen werden. Auch gibt es mittlerweile viele Flugzeuge, die in der Lage sind, einen Standardcontainer als Nutzlast im Flugzeugrumpf aufzunehmen.

Mit der erfindungsgemäßen Anlage wird nun der Transportcontainer oder mehrere solcher Transportcontainer, die zuvor die einzelnen Anlagenkomponenten aufgenommen haben, auch für die Errichtung der Windenergieanlage eingesetzt. So bildet der Container das gesamte Fundament der Windenergieanlage. Hierzu kann ein solcher Container mit einem entsprechenden Anschluss an den Turmfuß der Windenergieanlage versehen sein.

Dies kann einerseits dadurch geschehen, dass außenseitig am Container wenigstens ein Flansch mit einer Bohrungsreihe ausgebildet ist, durch die Schrauben verschraubt werden können, die dann auch den entsprechenden Turmfuß bzw. Turmfußflansch der Windenergieanlage aufnehmen können, so dass dann der Turmfuß der Windenergieanlage mit dem Containeranschluss verschraubt wird. Zur Beschwerung des Containers, damit dieser auch ein ausreichend großes Fundamentgewicht darstellt, kann der Container mit Sand, Beton, Wasser oder einem anderen Medium befüllt werden.

Die erfindungsgemäße Verwendung des Containers als Fundament hat den besonderen Vorteil, dass damit auch.schon werksseitig eine ausreichende werksseitige Fundamentierung mit der Anlage mitgeliefert wird und wenn die Aufstellung der Windenergieanlage in einem sehr abgelegenen Gebiet stattfinden soll, kann auf sehr einfache Weise eine Fundamentgründung durchgeführt werden, wozu bislang regelmäßig eine Stahlkonstruktion eingesetzt wird, die mit Beton gefüllt wird (s. Buch Erich Hau, 1996 "Windkraftanlage", S. 388, 389, 390).

Darüber hinaus kann bei der erfindungsgemäßen Windenergieanlage der Transformator als auch die gesamte Steuereinrichtung bereits in dem Container fest an vorbestimmter Stelle werksseitig eingebaut werden, so dass nach Errichtung der Windenergieanlage die Inbetriebnahme sehr schnell ohne sehr umständliche Verkabelung des Generators mit der Steuereinrichtung und dem Transformator durchgeführt werden muss.

Besonders vorteilhaft ist es auch, wenn die Windenergieanlage über wenigstens eine motorisch angetriebene oder manuell anzutreibende Seilwinde verfügt. Wenn das Seil über einen entsprechenden Hilfsträger (Stützrahmen mit Umlenkrolle), der an dem Container anzubringen ist, geführt wird, kann wenigstens der Turm der Windenergieanlage aufgerichtet werden und mit einer entsprechenden weiteren Seilführung auf dem Turm bzw. dem Maschinenhaus können weitere Anlagenkomponenten wie der Generator, der Rotor usw. zur Nabenhöhe hochgezogen werden, ohne dass es hierzu des Einsatzes eines Baukrans bedarf.

Um die Standsicherheit der Anlage zu verbessern, ist es auch möglich, zunächst einmal den Container, der das Fundament der Anlage bilden soll, in die Erde am Standort der Windenergieanlage einzugraben, so dass lediglich die Oberseite des Containers oder der obere Teile des Containers aus der Erde ragt.

Zur weiteren Verbesserung der Standsicherheit des Fundaments kann auch vorgesehen werden, dass bei zu einem vergrabenden Container in verschiedene Seitenwände des Containers Öffnungen eingelassen werden (oder werksseitig eingelassen sind), durch die dann Rohre, Stangen oder andere Verstrebungen in das containerumgebende Erdreich getrieben werden und diese Rohre, Stangen oder weiteren Verstrebungen werden dann mit dem Container verbunden, sei es durch Verschweißen, Verschrauben, Verklemmen oder auf andere Art und Weise.

Wenn die gesamte Steuerung bzw. alle wesentlichen elektrischen Komponenten wie Steuerschränke, Leistungsschränke, Transformator usw. in dem "Fundamentcontainer" oder einem weiteren Container bereits werksseitig fest untergebracht sind, bedarf es nach Errichtung der Anlagenkomponenten lediglich noch der Verkabelung dieser Komponenten mit dem Generator einerseits und dem Energieversorgungsnetz andererseits, so dass die gesamte Montage der Windenergieanlage mit einfachsten Mitteln möglich ist und die gesamte regelungstechnische Einrichtung der Windenergieanlage bereits werksseitig durchgeführt werden kann.

Die Erfindung ist nachfolgend anhand eines in einer Zeichnung dargestellten Ausführungsbeispiels näher erläutert. Es zeigen:
- Fig. 1: eine erste alternative Ausführungsform der Erfindung (Basis-modul);
- Fig. 2: einen Querschnitt durch den Container der Anlage nach Fig. 1;
- Fig. 3: eine weitere alternative Ausführungsform der Erfindung;
- Fig. 4: eine prinzipielle Darstellung der Erfindung während der Errichtung der Windenergieanlage;
- Fig. 5: eine prinzipielle Darstellung eines Einzelteils der Windenergieanlage in Richtung des Turms;
- Fig. 6a: eine Obenaufsicht einer Windordnung einer Containerlösung;
- Fig. 6b: eine Alternativlösung zu Figur 6a;
- Fig. 7a: ein Querschnitt durch einen erfindungsgemäßen Container und einen untersten, schwenkbaren Turmsegment;
- Fig. 7b: eine Anordnung des Turms (Fig. 7a) bei Schrägstellung des Containers (übertriebene Darstellung).

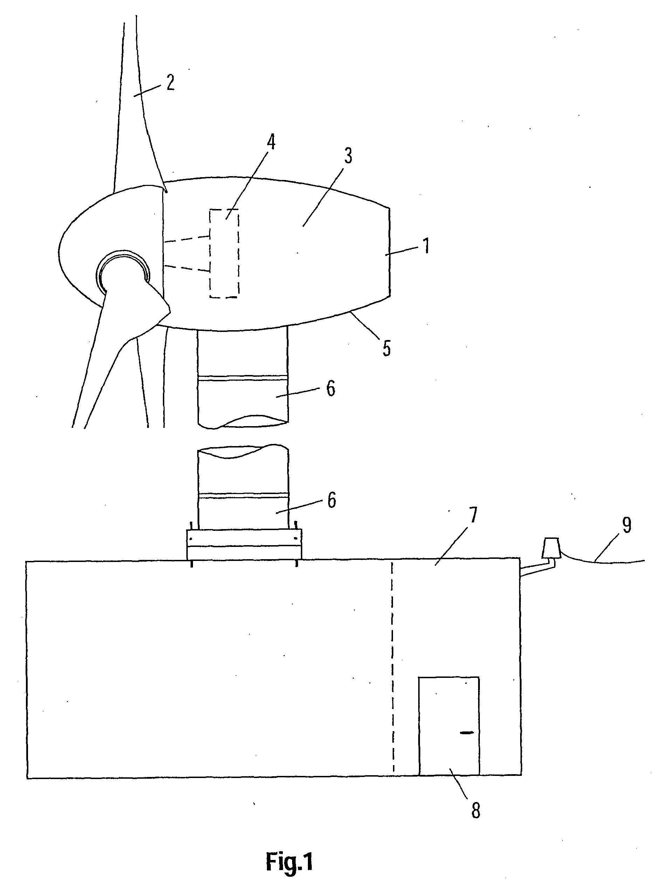

Fig. 1 zeigt in Prinzipdarstellung eine erfindungsgemäße Windenergieanlage mit einem Rotor 1 mit drei Rotorblättern 2, die von einem Maschinenhaus 3 getragen werden und mit einem Generator 4 im Maschinenhaus gekoppelt sind. Das gesamte Maschinenhaus ist durch eine Verkleidung (Gondel) 5 geschützt und wird von einem Turm 6 aufgenommen, welcher seinerseits von einem Container 7 aufgenommen wird. Der Container verfügt wiederum über einen Eingang 8, der zu einem Raum (nicht dargestellt) innerhalb des Containers 7 führt, innerhalb dem die Einrichtungen zur Steuerung und Regelung der Anlage wie auch der Transformator der Windenergieanlage, mit dem die erzeugte elektrische Leistung auf Netzniveau transformiert wird, damit die elektrische Leistung in das elektrische Netz, an dem die Windenergieanlage angeschlossen ist, eingespeist werden kann.

Damit der Container eine ausreichende Standfestigkeit und somit ein ausreichendes Fundament bilden kann, ist das Fundament dort, wo das Innere nicht für irgendwelche Anlagenteile oder Komponenten benötigt wird, mit Sand oder einem anderen Beschwerungsmaterial (z.B. Wasser) gefüllt.

In Fig. 1 ist der Turm mit seinem Fuß auf die Oberseite des Containers gesetzt und dort verschraubt. Der Container weist hierzu einen entsprechenden Flansch bzw. einen entsprechenden angebauten Teil auf, der über eine Bohrungsreihe verfügt, die mit einer entsprechenden Bohrungsreihe an der Unterseite des Turmflansches übereinstimmt, so dass beide Teile gegeneinander fest verschraubt werden können.

Der Turm besteht aus einzelnen Abschnitten (Schüsse), die so lang sind, dass sie noch vom Container aufgenommen werden können. Wird beispielsweise ein 40-Fuß-Standardcontainer eingesetzt, so ist es also ohne weiteres möglich, dass die einzelnen Turmschüsse eine Länge von etwa 12 m aufweisen.

Auch die weiteren Komponenten des Maschinenhauses oder des Rotors können einzeln innerhalb des Containers transportiert werden, wobei es auch durchaus möglich ist, dass einzelne Komponenten bereits vormontiert innerhalb des Containers untergebracht werden, z.B. ein Maschinenträger zusammen mit einem Achszapfen und einem darauf aufgebrachten Generator mit Läufer und Stator, so dass am Herstellort die gesamte Montage möglichst einfach gestaltet werden kann.

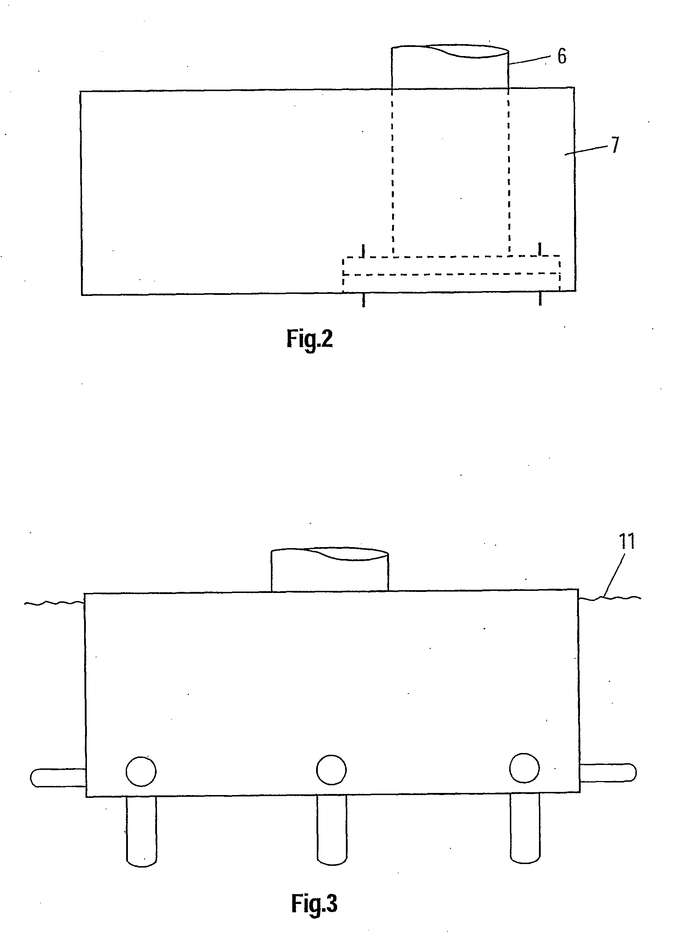

Fig. 2 zeigt eine alternative Ausführung zu Fig. 1, wobei die Alternative im Wesentlichen darin besteht, dass der Turmfuß nicht auf die Oberseite des Containers gesetzt wird, sondern dass in der Oberseite des Containers eine Aufnahme ausgebildet ist, durch welche der untere Turmbereich in den Container eingelassen werden kann, so dass dann der Turmfuß am Containerboden an dort vorgesehene Halterungen arretiert werden kann. Diese Arretierung kann wiederum durch Verschrauben oder durch andere mechanische Befestigungen gestaltet sein.

Im Bereich des Containeraufnahme an der Oberseite des Containers ist ein umlaufender Ring eingelassen, welcher für eine Abdichtung von Turm und Container einerseits, als auch für eine gut Kraftübertragung von Kräften vom Turm auf den Container andererseits sorgen.

Fig. 3 zeigt eine weitere Variante der Erfindung, wo der Container nicht auf dem Erdboden steht, sondern in den Erdboden eingelassen ist und darüber hinaus sind im Containerboden und in der Containerwandung umlaufend mehrere Öffnungen vorgesehen, durch welche Rohre, Stangen oder andere Verstrebungen in das umliegende Erdreich getrieben werden können. Diese Rohre, Stangen oder Verstrebungen sind wiederum mit der Containerwandung verbunden, z.B. durch Verschrauben und sorgen für eine erhöhte Standfestigkeit der Windenergieanlage auch bei sehr rauen Windbedingungen, wenn sehr große Kräfte in das Fundament eingeleitet werden müssen.

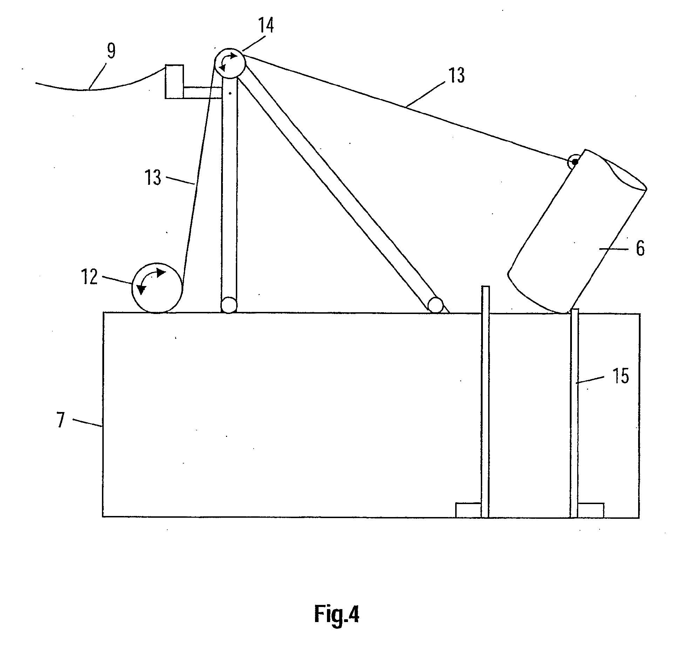

Fig. 4 zeigt in einer Prinzipdarstellung, wie eine erfindungsgemäße Windenergieanlage auch ohne einen Kran errichtet werden kann. Hierzu ist an dem Container eine Seilwinde 12 angebracht. Die Seilwinde kann über einen motorischen Antrieb verfügen, kann aber auch (insbesondere bei einem guten Untersetzungsgetriebe) manuell bedient werden. Die Seilwinde weist ein Seil 13 auf, welches über eine von einem Stützrahmen gehaltene Umlenkrolle 14 (es sind weitere Umlenkrollen denkbar) am Turm der Windenergieanlage befestigt ist. Die Umlenkrolle wird von einem Stützrahmen, der sich vom Container weg erstreckt, getragen, um somit für eine ausreichende Hebelwirkung für den Griff am Turm zu sorgen. Wird nun der Turm langsam aufgerichtet, so kann der Turm, der anfangs in der Horizontalen liegt, langsam in die Vertikale aufgerichtet werden und wird dann beispielsweise in ein Rohr 15, welches in den Container fest eingelassen ist, eingeführt. Dieses Rohr 15 hat die Funktion einer Hülse, welche später den Turm, soweit er in das Containerinnere ragt, umfasst. Mittels dieses Rohrs 15 ist ein sicheres Herablassen des Turms in den Container möglich.

Wenn das gesamte Maschinenhaus nicht eine zu große Masse aufweist, kann auch das gesamte Maschinenhaus bereits vor der Turmerrichtung am Turm selbst angebracht werden, so dass nach der Turmerrichtung die gesamten mechanischen Bestandteile der Windenergieanlage bereits positioniert sind.

Falls jedoch Einzelteile am Maschinenhaus oder der Gondel zur Turmspitze befördert werden müssen, ist es vorteilhaft, wenn am Maschinenhaus eine Umlenkvorrichtung angebracht, mittels der dann einzelne Komponenten zur Turmspitze hochgezogen und dort montiert werden können.

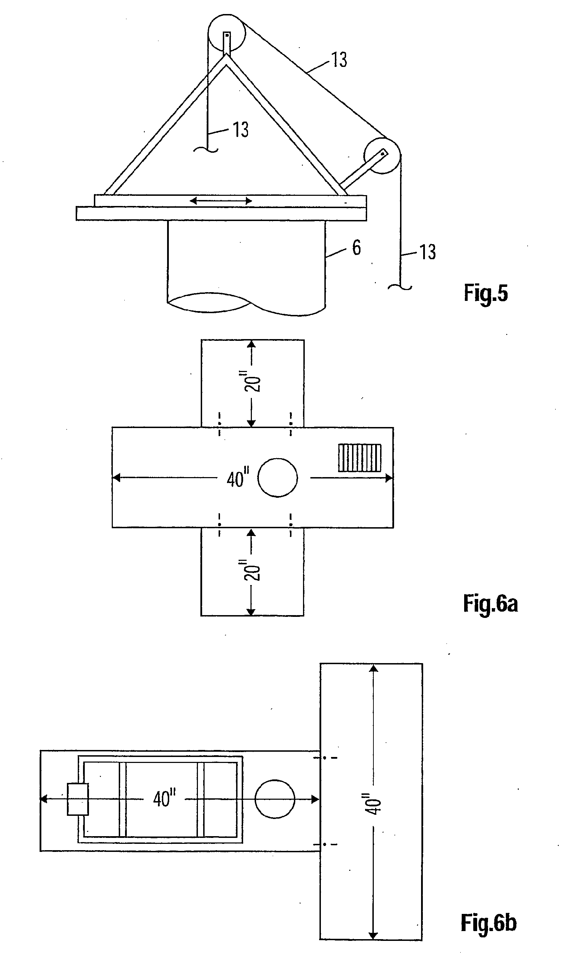

Fig. 5 zeigt eine solche prinzipielle Ausführung, wobei zwei Seilrollen von einer entsprechenden Stützvorrichtung; die am Maschinenhaus montiert ist, aufgenommen werden. Ist die Stützvorrichtung darüber hinaus noch in Pfeilrichtung (Fig. 5) verschiebbar können verschiedenste Komponenten in den verschiedensten Ebenen hochgezogen werden, z.B. Achszapfen, Generator sowie der Rotor oder einzelne Rotorblätter.

Falls für den gesamten Transport der Windenergieanlage mehrere Container benötigt werden, so können diese auch zur Entwicklung eines gesamten Fundaments miteinander verbunden werden, z.B. zu einer T-Struktur oder Kreuzstruktur, wie in Fig. 6b gezeigt. Werden dann solche Container mit Sand, Beton oder Wasser aufgefüllt, so reicht diese Fundamentmasse aus, um der gesamten Windenergieanlage ein ausreichendes Fundament zu bieten.

Zur Erhöhung der Stabilität des Fundaments kann es durchaus sinnvoll sein, auch innerhalb der Container Versteifungen oder Verstrebungen auszubilden, z.B. von gegenüberliegenden Containerwänden oder zwischen benachbarten Containerwänden, so dass eine Verformung des Containers aufgrund der in das Fundament eingeleiteten Kräfte sicher vermieden wird.

Bei der in Fig. 6 gezeigten Variante sind die Fundamentcontainer im Erdboden eingelassen und der Zugang zur Steuerung und Regelung von Teilen der Windenergieanlage erfolgt über eine Treppe, die an der Oberseite eines Containers eingelassen ist und einen Abstieg in den Raum des Containerinneren erlaubt.

Selbstverständlich ist es auch möglich, dass zwei Container übereinander gestellt werden, wobei der obere den Raum bildet, in dem die Teile wie Schaltschränke, Leistungsmodule oder der Transformator usw. positioniert werden, so dass der Container dann einen reinen "Fundament-container" bildet.

Falls genügend Containerinnenraum vorhanden ist, kann dieser Innenraum auch dazu verwendet werden, dass dieser den Platz für eine einfachere Wohnung aufnimmt.

Für die Fernüberwachung der Windenergieanlage kann bereits werksseitig eine entsprechende Telekommunikationseinrichtungen (z.B. Satellitentelefon) in der Windenergieanlage angebracht sein, so dass auch deren Installation bei Errichtung der Windenergieanlage entfällt.

Die beschriebene erfindungsgemäße Windenergieanlage zeichnet sich dadurch aus, dass sie auch an entferntesten Orten ohne besondere teure Kranvorrichtungen aufgestellt und montiert werden kann und dass es zur Montage nicht einmal besonders ausgebildeten Fachpersonals bedarf, wenn die wesentlichen Komponenten bereits fertig vormontiert sind und vor Ort nur noch zusammengestellt werden müssen oder wenn vor Ort nur noch einzelne Stecker zusammengesteckt werden müssen.

Die erfindungsgemäße Windenergieanlage kann bei einer Turmhöhe von etwa 30 bis 50m durchaus über eine Leistung von 100 bis 300 kW oder mehr.verfügen. Als Turm kann eine übliche Stahlrohrkonstruktion, wie sie bislang schon bei Windenergieanlagen zum Einsatz gekommen ist, verwendet werden.

Besondere Vorteile der erfindungsgemäßen Windenergieanlage bestehen aber auch darin, dass für die Erstellung der Windenergieanlage nicht mehr eigens ein Fundament gebaut werden muss, sondern dass dieses Fundament durch das Transportbehältnis, in welchem die einzelnen Anlagenkomponenten transportiert werden, selbst bereitgestellt wird. Wird der Fundamentcontainer oder werden die Fundamentcontainer dann mit einer Beschwerung versehen, so ist durch die werksseitig berechnete Auslegung sichergestellt, dass auch der Betrieb weit ab jeder Zivilisation sicher möglich ist und kein Umfallen der Windenergieanlage zu befürchten ist.

In den Containern zum Transport der einzelnen Komponenten der Windenergieanlage werden auch sämtliche Werkzeuge, die bei der Errichtung der Windenergieanlage benötigt werden, mitgeführt, so dass auch in Ländern, in denen solches Spezialwerkzeug nicht vorhanden ist, die Errichtung ohne Probleme möglich ist. Auch kann entsprechendes Ersatzmaterial (z.B. Schmierfette, Leitungen, Sicherungen, Austauschmodule usw.) gleich mitgeliefert und in einer entsprechenden Ersatzteilkammer des Containers untergebracht werden.

Mithin bedarf es für die Errichtung der erfindungsgemäßen Windenergieanlage lediglich des Transports der einzelnen Container. Da weltweit in allen Ländern ausreichend Transportkapazität vorhanden ist und vor allem auch solche Transportmittel zur Verfügung stehen, mit denen Standardcontainer transportiert werden können, ist der Transport der Windenergieanlage zum Aufstellort stets gewährleistet.

Die beschriebene Lösung einer Windenergieanlage, bei der alle Komponenten der Windenergieanlage in Containern transportier werden, kann um eine Vielzahl von Vorrichtung und Elementen ergänzt werden, wobei diese Vorrichtung und Elemente bereits werksseitig in den Containern, - falls notwendig - fest eingesetzt werden und auch sämtliche Anschlüsse dieser Vorrichtung und Elemente können, soweit sie im Betrieb Strom benötigen, werksseitig fertiggestellt werden, so dass der Betrieb der nachgenannten Vorrichtung und Elemente möglich ist.

Besonders zu erwähnen wären beispielsweise folgende sinnvolle Ergänzungen des vorbeschriebenen Basismoduls: Wasserpumpe, Brack-wasseraufbereitungsanlage, Meerwasserentsalzungsanlage, Solareinrichtungen, sei es zur Warmwassergewinnung oder zur zusätzlichen Stromgewinnung. Wassertank zur Speicherung einer bestimmten Menge von Wasser und anderer Flüssigkeit, Telekommunikationseinrichtungen, Akkumulatoren, die eine Stromversorgung bereitstellen, falls die Windenergieanlage nicht in Betrieb ist, ein Diesel/Pflanzenöl-Generator, ein Wärmetauscher, eine Luft-Dehydrierungseinheit zur Gewinnung von Wasser aus Luft, ein Motor, eine Wasserentkeimungsstation, eine Elektrolyseeinrichtung zur Gewinnung von Wasserstoff. Schließlich kann es auch sinnvoll sein, den noch verbleibenden freien Raum in einem Container mit einer Wohneinheit auszustatten, diese Wohneinheit einen Mindeststandard an Wohnungseinrichtung enthält, die einen Aufenthalt und die Selbstversorgung möglich macht. Auch können die Container schon beim Transport mehrere 100 m Stromkabel mit entsprechenden Kabel- und Steckeranschlüssen und anderes Material enthalten, die den Aufbau zumindest eines lokalen Netzes erlauben. Für den Fall, dass Pumpleistung benötigt wird, ist es auch vorteilhaft, wenn mehrere Meter Schlauch, z.B. 100 m und mehr in Containern mittransportiert werden, so dass Wasser über eine gewisse Strecke gepumpt werden kann.

Bei allen der vorgenannten Einrichtungen und den Elementen kann auch davon ausgegangen werden, dass der gesamte Aufbau und die gesamte Inbetriebnahme möglich sein sollte, auch wenn eine entsprechende unterstützende Technik am Ort der Herstellung nicht verfügbar ist. Das bedeutet konkret, dass möglichst sämtliche Vorrichtungen zum Aufbau und Inbetriebnahme der Windenergieanlage wie auch der vorgenannten Elemente mitgeliefert werden sollten. Hierzu zählt insbesondere auch Werkzeug wie auch eine Bedienungsanleitung, damit das erfindungsgemäße Baukastensystem, welches um eine Vielzahl der vorgenannten Vorrichtung und Elemente erweiterbar ist, in Betrieb genommen werden kann.

Soweit Standardcontainer eingesetzt werden und deren normale Stabilität und Versteifung für die Funktion eines Fundaments in der Windenergieanlage nicht ausreicht, so sollten diese Container bereits werksseitig innenseitig mit einer Versteifung, z.B. einem Versteifungsrahmen oder -platten oder -konstruktionen versehen sein, um die benötigte ausreichende Stabilität zu gewährleisten.

Es bietet sich auch an, dass Nivelliereinrichtungen in dem Container ausgebildet sind, so dass gewährleistet ist, dass der Turm der Windenergieanlage exakt vertikal aufgestellt ist. Sollte das Gelände, in dem die Windenergieanlage aufgestellt wird, uneben sein, so ist auch die nicht ebene Aufstellung eines Containers möglich, soweit die Vorrichtung zur Aufnahme des Turms eine Vertikalposition einstellbar ist. Dies kann z.B. dadurch gewährleistet werden, dass der Container ein in der Vertikalausrichtung verstellbares festes Turmsegment aufnimmt, wobei nach der Vertikalausrichtung dieses Turmsegments der Turm der Windenergieanlage hierauf gestellt wird. Dieses in dem Container ausgebildete unterste Turmsegment kann auf verschiedenste Art und Weise nach der Vertikalausrichtung fixiert werden, beispielsweise indem es innerhalb des Containers einbetoniert wird oder auf andere Art und Weise mit Verstrebungen fixiert wird.

Soweit mehrere Container miteinander verbunden werden sollen, damit eine möglichst gute Fundamentierung der Windenergieanlage gewährleistet ist, sollte auch eine entsprechende Verbindung der Container möglich sein und es sollten hierfür die entsprechenden Vorrichtungen zur Verbindung der Container - an welchen Stellen auch immer - bereits werksseitig ausgebildet werden oder es sollten die Verbindungselemente zum Verbinden der Container untereinander so mitgeliefert werden, dass eine einfache Montage möglich ist.

Falls die erfindungsgemäße Windenergieanlage auf einem felsigen Untergrund aufgestellt werden soll, bietet es sich auch, diejenigen Materialien mit der Windenergieanlage mitzutransportieren, die eine Verspannung der Container mit dem Untergrund erlauben.

Der für die Errichtung der Windenergieanlage unter Umständen notwendige Stützrahmen kann auch so ausgebildet sein, dass er sich unter Umständen modular vor Ort zusammensetzen lässt (Stabkonstruktion) und sollte entsprechend mit ausreichenden Versteifungen versehen sein, die eine sichere Errichtung der Windenergieanlage ermöglichen. Der Stützrahmen kann nach Errichtung der Windenergieanlage auch dazu verwendet werden, das von der Windenergieanlage abgehende Stromkabel aufzunehmen, so dass der Stützrahmen auch gleichzeitig bereits den ersten Strommasten bildet, für den der von der Windenergieanlage erzeugte Strom in das Netz gespeist werden kann.

Soweit notwendig, sollte es auch möglich sein, dass an der Oberseite der Container Solareinrichtungen fixiert werden können, soweit ein Photovoltaikelement eingesetzt wird, sollte dies mit der Regelungs- und Schaltungselektronik der Windenergieanlage verkoppelt werden können, damit der elektrische Strom der Photovoltaik in das Netz oder in die Akkumulatoren oder die weiteren Einrichtungen gespeist werden kann.

Falls notwendig, kann auch einer der Container eine Netztravostation aufnehmen, die für den Betrieb eines Stromnetzes benötigt wird.

Um einen sicheren Betrieb der Windenergieanlage zu erlauben, sollte diese stets so betrieben werden, dass sie nicht im Grenzbereich ihrer mechanischen oder elektrischen Belastung betrieben wird. Bevorzugt ist daher ein Betrieb in einem Bereich zu empfehlen, der 20 bis 30% oder mehr unterhalb des mechanischen oder elektrischen Grenzbereichs liegt. Damit einhergehende Verluste im Wirkungsgrad der Windenergieanlage sind hinzunehmen, um einen sehr langfristigen und nahezu wartungsfreien Betrieb der Windenergieanlage zu gewährleisten. Der vorgenannten Konzeption liegt der Gedanke zugrunde, dass bei relativ kleinen Anlagen sich unter Umständen ein Reparaturbetrieb kaum lohnt bzw. aus verschiedensten Gründen oft nicht möglich ist. Dem sicheren Betrieb der gesamten Windenergieanlage ist daher vor der Maximierung der Energieerzeugung Vorzug zu geben.

Es ist aus den vorgenannten Gründen auch dafür vorzusehen, dass eine Fernwartung so weit wie möglich durchgeführt werden kann.

Schließlich ist es auch für die erfindungsgemäße Windenergieanlage vorteilhaft, wenn die Variation der Kleinstteile, z.B. Schrauben, Stecker usw., die für die Errichtung und die Inbetriebnahme der Windenergieanlage benötigt werden, auf ein Minimum reduziert wird. Auch sollten die Kleinstteile weitestgehend Standardteile sein, so dass die Beschaffung von Ersatzkleinstteilen jederzeit möglich ist.

Schließlich sollte die gesamte Konstruktion der Windenergieanlage so ausgebildet sein, dass auch ein zerstörungsfreier Abbau der gesamten Anlage und deren Weitertransport in den Containern und der Wiederverwendung der gesamten Anlage, möglich ist.

Sollten für den Turm der Windenergieanlage mehrgeschossige Stahlrohre verwendet werden, so ist es auch vorteilhaft, wenn wenigstens zwei Geschosse ineinander gesteckt werden können, um somit möglichst platzsparend diese Geschosse in dem Container unterzubringen. Da regelmäßig der Turm einer Windenergieanlage am oberen Ende einen deutlich geringeren Durchmesser hat als am untersten Ende, so ist daher bei der Auslegung des Turmes entsprechend darauf zu achten, dass der äußere Durchmesser des obersten Geschosses geringer ist als der Innendurchmesser des untersten Turmgeschosses.

Falls möglich, sollten auch die Rotorblätter mit solchen äußeren Abmaßen versehen sein, so dass wenigstens eines der Rotorblätter in einem Turmabschnitt während des Transports steckbar ist.

Einheiten der Windenergieanlage, wie z.B. der Transformator, Akkumulatoren oder eine der vorgenannten ergänzenden Vorrichtungen und Elemente, die über ein relativ hohes Gewicht verfügen, sollten bereits werksseitig in dem Container fest verankert sein, so dass diese nach dem Aufstellen der Windenergieanlage nicht mehr verrückt werden müssen, um sie in Betrieb zu nehmen. Diese Konstruktion hat auch den Vorteil, dass bereits sämtliche Verkabelungen und Verbindungen dann zwischen diesen Einheiten werksseitig bereits endgültig vorgenommen werden können. Lediglich nur noch der äußere Anschluss dieser Einheiten von der Windenergieanlage zu. dessen Generator einerseits oder zum Netz oder anderen anzutreibenden Vorrichtungen und Elementen (s. oben) andererseits muss vorgesehen sein.

Für den Anschluss sollte weitestgehend auf Stecker zurückgegriffen werden können, die bereits vorgefertigt mitgeliefert werden und die so hergerichtet sind, dass auch von Sachunkundigen ein Fehlanschluss nicht möglich ist. Dies kann dadurch gewährleistet werden, dass die Stecker über uneinheitliche Abmaße verfügen, so dass ein Stecker nur mit einem einzigen entsprechenden Gegenkontakt zusammengesteckt werden können. Schließlich sollten alle Teile, die manuell bewegt werden müssen, mit entsprechenden Angriffspunkten versehen sein, damit der gesamte Aufbau mit einer möglichst geringen Anzahl von Menschen, z.B. 15 bis 20 Männern, möglich ist.

Die vorbeschriebene erfindungsgemäße Lösung ist insbesondere dafür geeignet, in Forschungsstationen und abgelegenen Gebieten als auch für den Aufbau von lokalen Netzen eingesetzt zu werden.

Die Nennleistung der Windenergieanlage sollte im Bereich von 50kW bis 500kW, bevorzugt etwa im Bereich von 100 bis 200kW liegen. Da die Rotorblätter in den Container mittransportiert werden sollen, ist deren Länge, soweit die Rotorblätter einteilig ausgeführt sind, auf das Innenabmaß der Container beschränkt, wobei es durchaus möglich ist, zwischen der Nabe und der Windenergieanlage und der Rotorblattwurzel auch Blattadapter mit einer Blattlänge zu versehen, die für eine Vergrößerung des gesamten Durchmessers der Windenergieanlage sorgen können. Für die Regelung der Windenergieanlage können sämtliche bekannte Techniken wie Stall-Regelung oder Pitch als Feststellung der Rotorblätter der Windenergieanlage verwendet werden. Auf Getriebe sollte bei der Windenergieanlage möglichst verzichtet werden, stellen doch gerade Getriebe der Windenergieanlagen das Portal dar, welches dein mit Abstand häufigsten Grund für den Ausfall einer Windenergieanlage bietet.

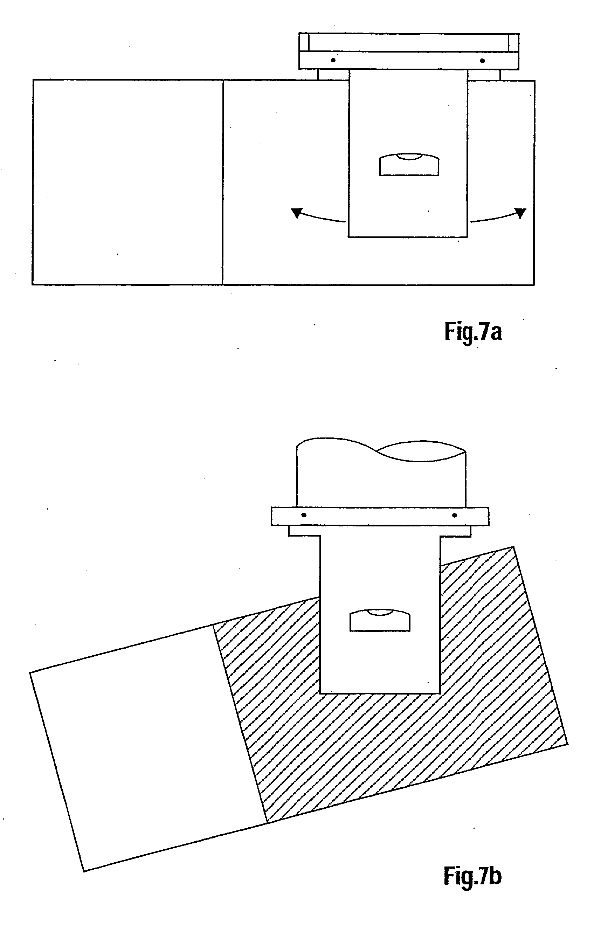

Figur 7b zeigt eine weitere alternative Ausführungsform der Erfindung. Hierbei wird nicht nur der Turm von dem Container aufgenommen, sondern der Turm ist um bestimmte Winkelgrade schwenkbar gelagert und wird von einer Kammer im Container aufgenommen. Wird nun die Windenergieanlage entrichtet und ist es nicht möglich, den Container absolut eben aufzustellen, so ist die Errichtung der Windenergieanlage mit einem völlig vertikal ausgerichteten Turm dennoch möglich, wie in Figur 7b gezeigt wird. Der Turm der Windenergieanlage weist im unteren Bereich Elemente auf, mit denen die Vertikalausrichtung exakt festgestellt werden kann (z.B. eine Wasserwaage) und wenn nach der Containerplatzierung das untere Turmsegment vertikal ausgerichtet wird, kann die entsprechende Containerkammer mit Sand oder Beton oder einem anderen Füllmaterial aufgefüllt werden, so dass eine ausreichende Fundamentierung des Turms gewährleistet ist und die gesamte Windenergieanlage auf dem untersten Turmsegment aufgebaut werden kann.

Es versteht sich von selbst, dass dann, wenn das unterste Turmsegment schwenkbar gelagert ist, auch entsprechende Arretierungsvorrichtungen ausgebildet sein können, um nach der Ausrichtung der untersten Turmsektion in die Vertikale die ausgerichtete Position beizubehalten.

## Patentansprüche

1. Windenergieanlage, bestehend aus mehreren Anlagenteilen wie Rotor, Generator, Maschinenhaus, Turm, Transformator, Schaltungselektronik, Solareinrichtung zur zusätzlichen Stromgewinnung und einer Einrichtung zur Steuer- und Regelung der Windenergieanlage,
wobei die Anlagenteile während des Transports zur Baustelle der Windenergieanlage in einem Standardcontainer, nämlich einem 20-Fuß- oder 40-Fuß-Standardcontainer, untergebracht sind und am Ort des Aufbaus der Windenergieanlage zu einer Windenergieanlage zusammengesetzt werden,
wobei der Standardcontainer so ausgebildet ist, dass er den Turm der Windenergieanlage aufnimmt und das Fundament der Windenergieanlage bildet,
wobei der Standardcontainer mit seiner Unterseite auf dem Erdboden liegt oder in den Erdboden eingelassen ist, und der Container einen Eingang (8) aufweist, der zu einem Raum innerhalb des Containers (7) führt, in dem die Einrichtung zur Steuer- und Regelung der Windenergieanlage wie auch der Transformator der Windenergieanlage eingebaut sind und der Turm der Windenergieanlage einen Turmfuß aufweist, welcher auf der Oberseite des Containers gesetzt ist oder an der Oberseite des Containers eine Aufnahme ausgebildet ist, durch welche der untere Turmbereich mit dem Turmfuß in den Container eingelassen ist, so dass dann der Turmfuß am Containerboden an der dort vorgesehenen Halterung arretiert ist,
wobei auf der Oberseite des Standardcontainers die Solareinrichtung gesetzt ist, welche mit der Regelungseinrichtung und der Schaltungselektronik der Windenergieanlage verkoppelbar ist, damit der elektrische Strom der Solareinrichtung in das Netz oder in einen Akkumulator oder in weitere Einrichtungen eingespeist werden kann, an welche die Windenergieanlage angeschlossen ist.

2. Verfahren zur Herstellung einer Windenergieanlage mit den Merkmalen nach Anspruch 1,
wobei der Standardcontainer mit einem Transportmittel, nämlich einem Lkw-Containertransporter, zu seinem Aufstellort transportiert wird.

3. Windenergieanlage nach Anspruch 1,
**dadurch gekennzeichnet, dass** Nivelliereinrichtungen in dem Container ausgebildet sind, so dass gewährleistet ist, dass der Turm der Windenergieanlage exakt vertikal aufgestellt ist.

4. Windenergieanlage nach einem der vorhergehenden Ansprüche,
**dadurch gekennzeichnet, dass** in dem Container ein Diesel-/Pflanzenöl-Generator untergebracht ist.

5. Windenergieanlage nach einem der vorhergehenden Ansprüche,
**dadurch gekennzeichnet, dass** der Standardcontainer mit einer Wohneinheit ausgestattet ist.

6. Windenergieanlage nach einem der vorhergehenden Ansprüche,
**dadurch gekennzeichnet, dass** der Container mehrere 100 m Stromkabel mit entsprechenden Kabel- und Steckeranschlüssen enthält.

7. Windenergieanlage nach einem der vorhergehenden Ansprüche,
**dadurch gekennzeichnet, dass** in dem Container werksseitig eine Wassserpumpe fest eingesetzt ist.

8. Windenergieanlage nach einem der vorhergehenden Ansprüche,
**dadurch gekennzeichnet, dass** der Container eine Versteifung aufweist.

9. Windenergieanlage nach einem der vorhergehenden Ansprüche,
**dadurch gekennzeichnet, dass** im Container ein Bedienungsraum mit Schalteinrichtungen vorgesehen ist.

## Claims

1. A wind power installation, consisting of a plurality of installation parts such as rotor, generator, machine house, tower, transformer, control electronics, solar equipment for generating additional power, and an apparatus for controlling and regulating the wind power installation,
wherein the installation parts are accommodated in a standard container, namely a 20-foot or 40-foot standard container, during transport to the construction site of the wind power installation, and are assembled to form a wind power installation at the site of erection of the wind power installation,
wherein the standard container is so constructed that it receives the tower of the wind power installation and forms the base of the wind power installation,
wherein the standard container rests by its underside on the ground or is sunk by its underside into the ground, and the container has an entrance (8) leading to a space inside the container (7), in which space the apparatus for controlling and regulating the wind power installation and also the transformer of the wind power installation are installed, and the tower of the wind power installation has a tower foot which is placed on the top side of the container, or a receiving arrangement is provided at the top side of the container, through which receiving structure the lower region of the tower is let into the container by the tower foot, so that the tower foot is then arrested at the floor of the container at the mounting provided there,
wherein the solar equipment is placed on the top side of the standard container, which solar equipment may be coupled to the regulating apparatus and to the control electronics of the wind power installation so that the electric current of the solar equipment may be fed into the grid or into a storage battery or into further devices to which the wind power installation is connected.

2. A method for the production of a wind power installation having the features according to claim 1,
wherein the standard container is transported to its erection site by a means of transport, namely a container transporter lorry.

3. A wind power installation according to claim 1,
**characterised in that** levelling devices are provided in the container, so that it is ensured that the tower of the wind power installation is erected exactly vertically.

4. A wind power installation according to any one of the preceding claims,
**characterised in that** a diesel / vegetable oil generator is housed in the container.

5. A wind power installation according to any one of the preceding claims,
**characterised in that** the standard container is equipped with an accommodation unit.

6. A wind power installation according to any one of the preceding claims,
**characterised in that** the container contains several 100 m of power cable with appropriate cable and plug connections.

7. A wind power installation according to any one of the preceding claims,
**characterised in that** a water pump is fixedly installed in the container at the factory.

8. A wind power installation according to any one of the preceding claims,
**characterised in that** the container has reinforcing means.

9. A wind power installation according to any one of the preceding claims,
**characterised in that** an operator room with control equipment is provided in the container.

## Revendications

1. Éolienne, constituée de plusieurs parties d'éolienne telles rotor, générateur, nacelle, mat, transformateur, électronique de circuit, dispositif solaire pour la production supplémentaire de courant et un dispositif pour commander et régler l'éolienne,
les parties d'éolienne étant logées dans un conteneur standard, à savoir un conteneur standard de 20 pieds ou de 40 pieds pendant le transport jusqu'au site de construction de l'éolienne et étant assemblées en une éolienne sur le lieu de l'édification de l'éolienne,
le conteneur standard étant conçu de manière à recevoir le mat de l'éolienne et à former les fondations de l'éolienne,
le conteneur standard reposant avec son côté inférieur sur le sol ou étant introduit dans le sol et le conteneur présentant une entrée (8) qui donne dans une chambre à l'intérieur du conteneur (7) dans laquelle le dispositif pour commander et régler l'éolienne ainsi que le transformateur de l'éolienne sont installés et le mat de l'éolienne présentant une base qui est posée sur le côté supérieur du conteneur ou un logement étant formé sur le côté supérieur du conteneur, logement par lequel la zone inférieure du mat est introduite avec la base du mat dans le conteneur afin que la base du mat soit alors bloquée sur le fond du conteneur dans le dispositif de retenue prévu à cet endroit,
le dispositif solaire étant placé sur le côté supérieur du conteneur standard et pouvant être couplé au dispositif de réglage et à l'électronique de circuit de l'éolienne afin que le courant électrique puisse être injecté dans le réseau ou dans un accumulateur ou dans d'autres dispositifs auxquels l'éolienne est raccordée.

2. Procédé de fabrication d'une éolienne présentant les caractéristiques de la revendication 1,
le conteneur standard étant transporté sur son lieu de mise en place par un moyen de transport, à savoir un camion porte-conteneur.

3. Éolienne selon la revendication 1, **caractérisée en ce que** des dispositifs de mise à niveau sont formés dans le conteneur afin de garantir que le mat de l'éolienne est placé exactement à la verticale.

4. Éolienne selon l'une quelconque des revendications précédentes, **caractérisée en ce qu'**un générateur diesel / huile végétale est logé dans le conteneur.

5. Éolienne selon l'une quelconque des revendications précédentes, **caractérisée en ce que** le conteneur standard est équipé d'une unité d'habitation.

6. Éolienne selon l'une quelconque des revendications précédentes, **caractérisée en ce que** le conteneur contient plusieurs 100 m de câble électrique avec raccords de câble et connecteurs correspondants.

7. Éolienne selon l'une quelconque des revendications précédentes, **caractérisée en ce qu'**une pompe à eau est placée dans le conteneur en usine.

8. Éolienne selon l'une quelconque des revendications précédentes, **caractérisée en ce que** le conteneur présente un renforcement.

9. Éolienne selon l'une quelconque des revendications précédentes, **caractérisée en ce qu'**un espace de commande avec des dispositifs de commutation est prévu dans le conteneur.
